# EUROPEAN PATENT SPECIFICATION

(11) **EP 3 082 460 B1**
(45) Date of publication and mention of the grant of the patent: **03.11.2021**
(21) Application number: 14872060.0
(22) Date of filing: 08.12.2014
(51) Int. Cl.: A23L 27/30

(54) **MODULATION OF BITTERNESS AND MOUTHFEEL VIA SYNERGISTIC MIXTURES OF LONG CHAIN FATTY ACIDS**
MODULATION DER BITTERKEIT UND DES MUNDGEFÜHLS ÜBER SYNERGISTISCHE MISCHUNGEN VON LANGKETTIGEN FETTSÄUREN
MODULATION DE L'AMERTUME ET DE LA SENSATION EN BOUCHE PAR DES MÉLANGES SYNERGIQUES D'ACIDES GRAS À LONGUE CHAÎNE

(30) Priority: 20.12.2013 US 201361918709 P
(43) Date of publication of application: 26.10.2016
(60) Divisional application: 21197862.2
(73) Proprietor: PepsiCo, Inc., Purchase, NY 10577 (US)
(72) Inventor: AGLIONE, Anthony, Rochelle Park, NJ 07662 (US); CASSUTT, Kelly J., Somerset, NJ 08873 (US); DRAGAN, Sofya, Chester, NY 10918 (US); GRAVINA, Stephen, Rutherford, NJ 07070 (US); KURASH, Yuliya, Tarrytown, NY 10591 (US); JOHNSON, Winsome, Ossining, NY 10562 (US)
(74) Representative: Jenkins, Peter David
(86) International application number: PCT/US2014/068996
(87) International publication number: WO 2015/094729

(56) References cited:
- DE-U1-202008 006 164
- JP-A- 2008 263 903
- US-A1- 2008 226 790
- US-A1- 2011 123 677
- US-A1- 2012 178 828
- DATABASE WPI Week 199417 Thomson Scientific, London, GB; AN 1994-140527 XP002770423, -& JP H06 86660 A (MITSUBISHI KASEI CORP) 29 March 1994 (1994-03-29)
- LEY J P ED - SIMONS CHRISTOPHER T: "Masking bitter taste by molecules", CHEMOSENSORY PERCEPTION, SPRINGER NEW YORK LLC, US, vol. 1, 1 January 2008 (2008-01-01), pages 58-77, XP002543471, ISSN: 1936-5802, DOI: 10.1007/S12078-008-9008-2 [retrieved on 2008-02-13]
- DATABASE GNPD [Online] MINTEL; August 2013 (2013-08), Anonymous: "Multifruit and Milk Drink", Database accession no. 2155832
- DATABASE GNPD [Online] MINTEL; November 2006 (2006-11), Anonymous: "Orange & Pineapple Juice", Database accession no. 617481
- DATABASE GNPD [Online] MINTEL; June 2012 (2012-06), Anonymous: "Concentrated Pineapple Calpis", Database accession no. 1826124
- DATABASE GNPD [Online] MINTEL; March 2011 (2011-03), Anonymous: "White Peach Drink", Database accession no. 1505498
- Belitz, Grosch, Schieberle: "Food Chemistry", 2009, Springer * pages 514,838,839 *

## Description

### FIELD OF THE INVENTION

The invention relates to a beverage. In particular, this invention relates to a beverage having a formulation incorporating Rebaudiose A and having suitable to meet market demand for nutritional characteristics and/or flavor profiles in beverages.

### BACKGROUND OF THE INVENTION

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

JP-A-H06/86660 discloses a canned beverage comprising dimethylsilicone oil and a sugar fatty acid ester to prevent escape of the beverage upon opening of the can. JP-A-2008/263903 discloses a food or drink with lower fatty acid as a flavor reinforcer.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

It is an object of the present invention to provide a beverage. It is an object of at least certain embodiments of the invention (that is, not necessarily all embodiments of the invention) to provide a beverage having desirable taste properties. It is an object of at least certain (but not necessarily all) embodiments of the invention to provide a beverage having an improved formulation. These and other objects, features and advantages of the invention or of certain embodiments of the invention will be apparent to those skilled in the art from the following disclosure and description of exemplary embodiments.

### BRIEF SUMMARY OF THE INVENTION

The present invention provides a beverage according to claim 1. Certain more specific aspects of the invention are set out in the dependent claims.

Described herein is a beverage. The beverage is sweetened with Rebaudiose A and further comprises a combination of caprylic acid, caproic acid, and butyric acid. This composition may further comprise heptanoic acid, lauric acid, propionic acid, isovaleric acid, mixtures of any or all of them. In addition to the fatty acids, aldehydes are included in the beverage, in particular decanal, nonanal, and 2-methyl-butyraldehyde. The components are present in an amount to improve mouthfeel of the beverage.

### BRIEF DESCRIPTION OF THE DRAWINGS

Figure 1 shows results from samples evaluated for heaviness/weight.
Figure 2 shows results from samples evaluated for perceived viscosity.
Figure 3 shows results from samples evaluated for syrupy in mouth.
Figure 4 shows results from samples evaluated for syrupy mouthcoating.
Figure 5 shows results from samples evaluated for cola flavor.
Figure 6 shows results from samples evaluated for sweet taste.
Figure 7 shows results from samples evaluated CO₂ Flavor.
Figure 8 shows results from samples evaluated for Perceived Carbonation.
Figure 9 shows results from samples evaluated for Bite/Tingle.
Figure 10 shows results from samples evaluated for Chemical Solvent Flavor.
Figure 11 shows results from samples evaluated for True Bitter taste.
Figure 12 shows results from samples evaluated for Astringent.
Figure 13 shows results from samples evaluated for Sour Taste.

### DETAILED DESCRIPTION OF THE INVENTION

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant and flavoring. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweetener, kola nut extract and/or other flavoring, caramel coloring, phosphoric acid, and optionally other ingredients. Additional and alternative suitable ingredients will be recognized by those skilled in the art given the benefit of this disclosure.

The present invention utilizes certain combinations of fatty acids. Fatty acids in general are carboxylic acids with a long aliphatic tail (chain), which is either saturated or unsaturated. Most naturally occurring fatty acids have a chain of an even number of carbon atoms, from 4 to 28. Fatty acids are usually derived from triglycerides or phospholipids. Fatty acids often add in adverse tastes to beverages such as rancidity, pungency, cheese-like, or spoiled goat milk tastes.

It was discovered that certain combinations of fatty acids provide unexpected results in the properties of certain beverages which do not occur by the same fatty acids by themselves or prior combinations thereof.

As used herein, "taste" refers to a combination of sweetness perception, temporal effects of sweetness perception, i.e., on-set, intensity, and duration, off-tastes, e.g. bitterness and metallic taste, and residual perception (aftertaste).

Bitterness or bitter off-note taste refers to a sharpness of taste such as acidity. Bitterness is often associated with certain drinks such as coffee or beverages containing caffeine or quinine. Bitterness is also associated with certain non-nutritive sweeteners such as aspartame, Rebaudioside A and other steviol glycosides. It has long been sought in the art to address the problems of bitterness in reduced and low calorie beverages that utilize such non-nutritive sweeteners.

Mouthfeel is a tactile perception and means the body and perceived thickness of the beverage upon consumption. Generally it is desired to provide a reduced or low calorie beverage having the mouthfeel of a full calorie beverage made from sugar such as sucrose or high fructose corn syrup.

### Linoleic acid and heptanoic acid

In accordance with one aspect of the present disclosure, although not in accordance with the present invention as recited in the claims, a beverage is provided which comprises a combination of linoleic acid and heptanoic acid in a combined amount sufficient to reduce (i.e., to partially, substantially or completely eliminate) a bitter off-note taste of a non-nutritive sweetener(s) and/or caffeine present in the beverage.

Linoleic acid (LA) is an unsaturated omega-6 fatty acid. It is a colorless liquid at room temperature. Chemically, linoleic acid is a carboxylic acid with an 18-carbon chain and two "cis" double bonds; the first double bond is located at the sixth carbon from the omega end. In vitro, gamma-linoleic, monolinoleic, linolenic also showed similar activity.

Heptanoic acid, also called enanthic acid, is a saturated fatty acid. Specifically, it is an organic compound composed of a seven-carbon chain terminating in a carboxylic acid.

Alone, linoleic acid and hepatnoic acid do not provide suitable results, such as reducing or eliminating the bitterness of a beverage containing Rebaudioside A. For example, the beverage may be less sweet if linoleic acid is used alone or have no activity if heptanoic acid is used alone.

It was discovered that the combination of linoleic acid and heptanoic acid reduces a bitter off-note taste of the non-nutritive sweetener while maintaining sweetness of the beverage. That is the combination blocks bitterness as it retains the sweetness.

The total concentration of the combined linoleic acid and heptanoic acid is between about 0.001 wt% and about 1.0 wt%, e.g., between about 0.05 wt% and about 0.55 wt%, based on total weight of the beverage. In certain exemplary embodiments, the concentration of the combined linoleic acid and heptanoic acid in the beverage is between about 50 parts per trillion and about 500 parts per million, e.g., between about 1 part per million and about 250 parts per million.

The ratio of linoleic acid to heptanoic acid is 1:10000 to 1:1.

A beverage comprises at least a combination of water, a non-nutritive sweetener, linoleic acid and heptanoic acid wherein the combination of linoleic acid and heptanoic acid reduces a bitter off-note taste of the non-nutritive sweetener. The bitter off-note taste is reduced by at least 50 %, at least 60 %, at least 70 %, at least 80 %, or at least 90% over a beverage containing the non-nutritive sweetener without the linoleic acid and heptanoic acid.

If needed, the beverage may further contain an acid blocker to an astringency blocker which reduces sourness or astringency. Suitable acid/astringency blockers include, but are not limited to mint factions and menthol factions WS-3, WS-23, FrescolatMGA, FrescolatML, PMD38, CoolactP, and Cooling Agent 10.

Typically the fatty acids are first dissolved in a solvent and then added to a beverage or beverage concentrate. Any suitable food grade solvent may be used such as, but not limited to, propylene glycol and ethanol.

As discussed in further detail below, the beverage may further contain additional sweeteners, flavorings, electrolytes, vitamins, fruit juices or other fruit products, tastents, masking agents and the like, flavor enhancers, preservatives, and/or carbonation. Optionally, caffeine can be added.

Although any beverage is contemplated as discussed in further detail below, the present composition is particularly useful in cola products, lemon-lime carbonated beverages, and flavored nutritional waters containing non-nutritive sweeteners such as Rebaudioside A.

Without being bound by theory, it is believed that linoleic and heptanoic acid in combination, and as described above, act synergistically to reduce or eliminate the bitterness associated with rebaudioside A in beverages. Specifically, it is believed that the combination of linoleic and heptanoic acids block binding of RebA to T2R14 and T2R4 but not to T1R2. Inhibition of T2R14 and T2R4 internalization by combination of linoleic and heptanoic acids lead to blocking of RebA-mediated bitterness while still maintaining sweetness and flavor profile.

### Seven fatty acids and three aldehydes

In accordance with an aspect of the present invention as recited in the claims, a beverage as defined in claim 1 is provided. The beverage comprises a combination of fatty acids and aldehydes. The beverage is sweetened with a non-nutritive sweetener, Rebaudioside A. The beverage further comprises a combination of caprylic acid, caproic acid, and butyric acid. This composition may further comprise heptanoic acid, lauric acid, propionic acid, and isovaleric acid. In addition to these fatty acids, at least one aldehyde is included in the beverage, the aldehyde being selected from decanal, nonanal, and 2-methyl-butyraldehyde. The components are present in an amount to improve mouthfeel while mitigating any adverse tastes of the fatty acids. The concentration of the combined caprylic acid, caproic acid, and butyric acid in the beverage is between 50 parts per trillion and 500 parts per million. The aldehyde is present in an amount from 0.001 wt% to 1.0 wt

Alone, fatty acids do not provide suitable results. For example, the beverage may be too watery or may be perceived as thicker but lack syrupy mouthfeel. Further, fatty acids often provide adverse tastes.

It was discovered that the combination of at least caprylic acid, caproic acid, and butyric acid improves mouthfeel of a beverage containing the non-nutritive sweetener without making the beverage too pungent or astringent.

It was further discovered that mouthfeel could be further improved by the addition of one, two, three, or all of the following fatty acids: heptanoic acid, lauric acid, propionic acid, and isovaleric acid.

The inventors also found that the addition of aldehydes provide improved mouthfeel i addition to mitigating the adverse tastes of the fatty acids. Decanal, nonanal, and 2-methyl-butyraldehyde are particularly useful in combination with the fatty acids.

In certain exemplary embodiments, the weight percent of the long chain fatty acid compounds in the beverage is between about 0.001 wt% and about 1.0 wt%, e.g., between about 0.05 wt% and about 0.55 wt%, based on total weight of the beverage. The concentration of total fatty acids in the beverage is between 50 parts per trillion and 500 parts per million, in certain exemplary embodiments, between 1 part per million and 250 parts per million.

In accordance with the invention, the weight percent of the aldehydes in the beverage is between 0.001 wt% and 1.0 wt%, e.g., in certain exemplary embodiments between about 0.005 wt% and about 0.55 wt%, based on total weight of the beverage. In certain exemplary embodiments, the concentration of total fatty acids in the beverage is between 50 parts per trillion and 500 parts per million, e.g., between 1 part per million and 250 parts per million.

An exemplary beverage comprises at least a combination of water, a non-nutritive sweetener, a combination of caprylic acid, caproic acid, and butyric acid, and a combination of aldehydes. In another aspect, the composition may further comprise one, two, three, or all of heptanoic acid, lauric acid, propionic acid, and isovaleric acid. In yet another aspect, the aldehydes are a combination of decanal, nonanal, and/or 2-methyl-butyraldehyde.

When sugar is reduced in a beverage, often backend sourness or astringency arises. To eliminate backend sourness or astringency, the beverage may further contain an acid blocker to an astringency blocker which also improves mouthfeel. Suitable acid/astringency blockers include, but are not limited to mint factions and menthol factions. Such blockers may further provide a fuller mouthfeel.

Typically the fatty acids are first dissolved in a solvent and then added to a beverage or beverage concentrate. Any suitable food grade solvent may be used such as, but not limited to, propylene glycol and ethanol.

As discussed in more detail below, the beverage may further contain additional sweeteners, flavorings, electrolytes, vitamins, fruit juices or other fruit products, tastents, masking agents and the like, flavor enhancers, preservatives, and/or carbonation. Optionally, caffeine can be added.

Although any beverage is contemplated as discussed in further detail below, the present invention is particularly useful in cola products, lemon-lime carbonated beverages, sport beverages, juices, tea, and flavored nutritional waters containing non-nutritive sweeteners such as Rebaudioside A.

### General Aspects

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid, slurry or solid concentrates, flavored waters, enhanced waters, fruit juice and fruit juice-flavored drinks, sport drinks, and alcoholic products.

At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

The long-chain fatty acids, as utilized within the scope of the invention, may include both natural and synthetic forms of organic acids. In certain exemplary embodiments, both synthetic and natural fatty acids are used in conjunction to achieve one or more benefits, such as reducing the off-note taste of one or more non-nutritive sweeteners. Naturally occurring long chain fatty acids may be derived from animal and vegetable fats. Synthetic fatty acids may be produced by a wide variety of methods known to those skilled in the art. As one example, fatty acids may be produced by hydrolyzing the ester linkages in fat and/or oil by removal of glycerol.

In at least certain exemplary embodiments of the beverage products disclosed here, the long chain fatty acid combination is a masking agent for masking one or more off-notes of one or more non-nutritive sweeteners. For example, while non-nutritive sweeteners provide a characteristic and desirable sweet flavor, non-nutritive sweeteners may also provide non-sweet off-notes. For example, steviol glycosides, e.g., rebaudiosides such as Rebaudioside A, stevioside, etc. and other non-nutritive sweeteners are often accompanied by metallic or bitter off-notes. Thus, according to certain embodiments of the invention, the combination of linoleic acid and heptanoic acid is utilized in an amount sufficient to reduce the bitter off-notes of the steviol glycosides. The quantity of the linoleic acid and heptanoic acid used to mask the off notes depend on a myriad of factors, including the type of beverage, environmental conditions in manufacturing, distributing and storing the beverages, the beverage flavor profile, pH of the beverage, among other factors.

Acid used in beverages disclosed here refers to non-long chain fatty acids and can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1% to 0.25% by weight of the beverage, depending upon the acidulant used, desired pH, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, tangerine, mandarin orange, tangelo, and pomelo and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 87.8°C (190° F) for 10 seconds, tunnel pasteurization methods typically using lower temperatures for a longer time, e.g., about 71.1 (160° F) for 10-15 minutes, and retort methods typically using, e.g., about 121.1 (250° F) for 3-5 minutes at elevated pressure, i.e., at pressure above 1 atmosphere.

### Example 1 - Bitter Blocker not according to the invention

Six fatty acids were evaluated individually for their effect on reducing bitter perception of Reb-A (500 ppm) relative to 100% Reb A (500 ppm), 25% reduced Reb A (375 ppm) and 50% reduced Reb A (250 ppm) benchmarks. The compounds tested were caprylic acid, heptanoic acid, valeric acid, caproic acid, lauric acid, and linoleic acid in amounts of 0.0005 wt% to 0.55 wt% in ethanol.

Twenty five trained panelists received sample sets containing four samples: 100% Reb A (Control); 25 % reduced Reb A; 50% reduced Reb A; and 100% Reb A and bitter blocker. Panelists ranked samples in order of bitterness intensity, from low bitter to high bitter. Each set of samples was evaluated twice. Based on the results, linoleic acid significantly reduced the bitterness perception of Reb-A. Caprylic acid and heptanoic acid showed marginal effectiveness in reducing bitterness. Valeric acid, caproic acid, and lauric acid did not show significant bitterness masking ability and myrcene was not effective in reducing bitterness. These examples showed evidence for bitterness mitigation.

### Example 2 - Mouthfeel

Rheology of a beverage is dominated by Brix. For example, a full calorie beverage containing HFCS has higher viscosity or fuller mouthfeel than a beverage having 25% reduced HFCS or a beverage having 50% reduced HFCS. In reduced calorie (reduced HFCS) colas, it is a goal to achieve the same sweetness and mouthfeel of full calorie/ HFCS colas.

GRAS compounds were evaluated for their efficacy as mouthfeel enhancers in reduced HFCS colas. The compounds were evaluated in both 25% reduced and 50% reduced HFCS cola bases. Full HFCS cola was included as the benchmark sample and both the 25% reduced HFCS cola and 50% reduced HFCS cola bases were included as control samples. Flavor #16 is an inventive sample.

Descriptive analysis panelists rated the intensity of mouthfeel attributes and sweetness for the 14 cola samples.
- Benchmark and Reduced HFCS Controls
   ∘ # 906 - 50% reduced HFCS Control
   ∘ # 907 - 25% reduced HFCS Control
   ∘ # 908 - Full HFCS Benchmark
- 50% Reduced HFCS Variants
   ∘ # 909 - KSS042111A v.3 @ 0.03%
   ∘ # 910 - SIE @ 0.045%
   ∘ # 911 - Flavor #16 @ 0.04%
   ∘ # 912 - H63 @ 0.095%
   ∘ # 913 - H63/RMW @ 0.095%
- 25% Reduced HFCS Variants
   ∘ # 914 - TA #1 (Taste Advantage) @ 0.02%
   ∘ # 915 - Flavor #16 @ 0.04%
   ∘ #916 - SIE @ 0.045%
   ∘ # 917 - H63 @ 0.095%
   ∘ # 918 - H63/RMW
   ∘ # 919 - KSS042111A v.3 @ 0.03%

The samples were evaluated for various properties including 1) heaviness/weight; 2) perceived viscosity; 3) syrupy in mouth; 4) syrupy mouthcoating; 5) cola flavor; 6) sweet taste; 7) CO₂ Flavor; 8) Perceived Carbonation; 9) Bite/Tingle; 10) Chemical Solvent Flavor; 11) True Bitter taste; 12) Astringent; and 13) Sour Taste. The results are set forth below.

The desirable result in all of the categories is the sample to most resemble the full calorie beverage.

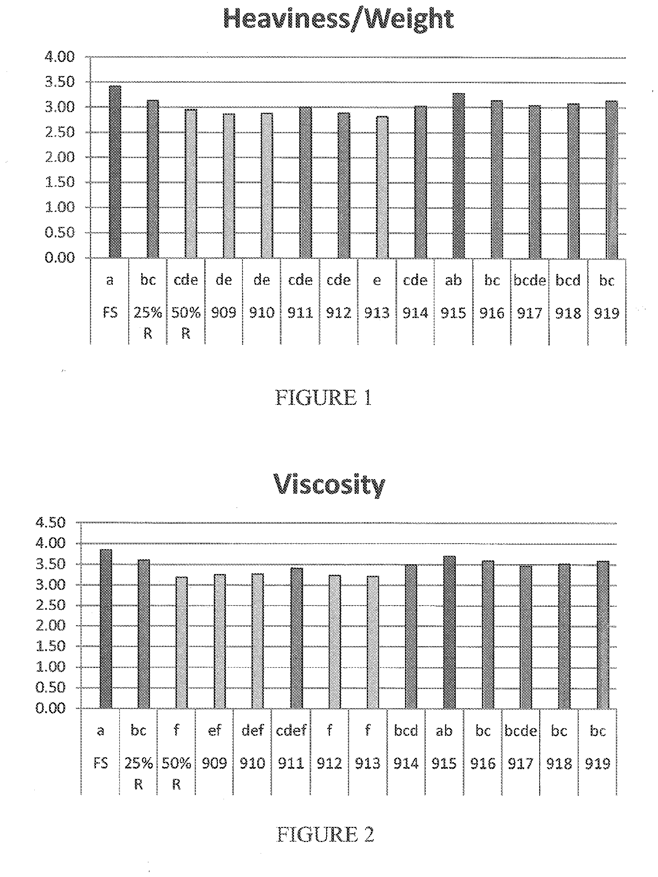

### Heaviness, Figure 1

25% Reduced HFCS Variants (#914-919): Compound #915 is not different from either Full HFCS Benchmark or 25% reduced HFCS control for Heaviness/Weight. Remaining 25% reduced HFCS variants are not different from either 25% reduced HFCS or 50% reduced HFCS controls.

50% Reduced HFCS Variants (#909-913): Compounds #911 and #912 approach the 25% are not different from either 25% reduced HFCS or 50% reduced HFCS controls for Heaviness/Weight. Remaining 50% reduced HFCS variants are not different from 50% reduced HFCS control.

### Perceived Viscosity, Figure 2

25% Reduced HFCS Variants (#914-919): Compound #915 is not different from the Full HFCS Benchmark for Viscosity. Remaining 25% reduced HFCS variants are not different from 25% reduced HFCS control.

50% Reduced HFCS Variants (#909-913): Compound #911 approaches the Viscosity of 25% reduced HFCS control. Remaining 50% reduced HFCS variants are not different than 50% reduced HFCS control.

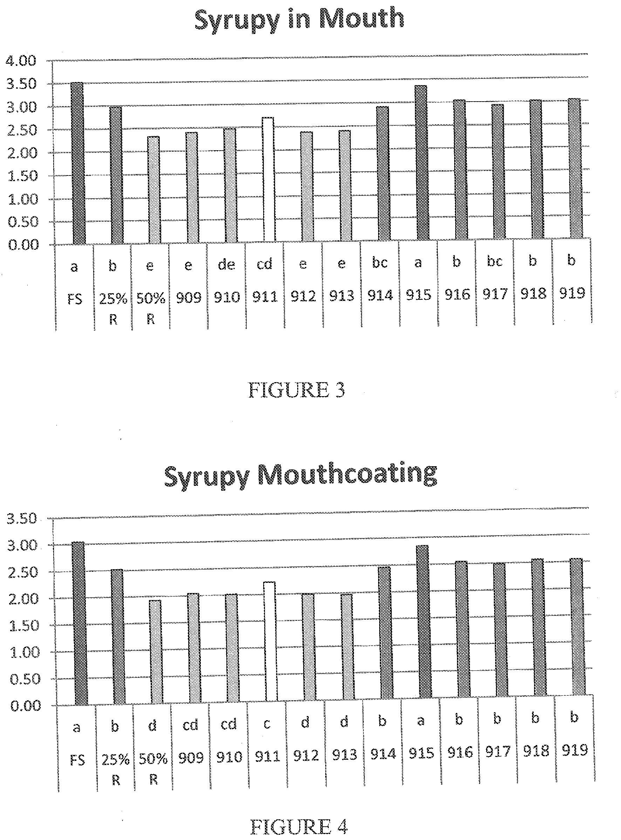

### Syrupy in Mouth, Figure 3

25% Reduced HFCS Variants (#914-919): Compound #915 is not different from the Full HFCS Benchmark for Viscosity. Remaining 25% reduced HFCS variants are not different from 25% reduced HFCS control

50% Reduced HFCS Variants (#909-913): Compound #911 approaches the Viscosity of 25% reduced HFCS control. Remaining 50% reduced HFCS variants are not different than 50% reduced HFCS control

### Syrupy Mouthcoating, Figure 4

25% Reduced HFCS Variants (#914-919): Compound #915 is similar to Full HFCS Benchmark for Syrupy Mouthcoating. Remaining 25% reduced HFCS variants are not different than 25% reduced HFCS control

50% Reduced HFCS Variants (#909-913): Compound #911 is one of the highest in this group for Syrupy Mouthcoating. Lower than the 25% reduced HFCS control but higher than the 50% reduced HFCS control. Remaining 50% reduced HFCS variants are not different from 50% reduced HFCS control.

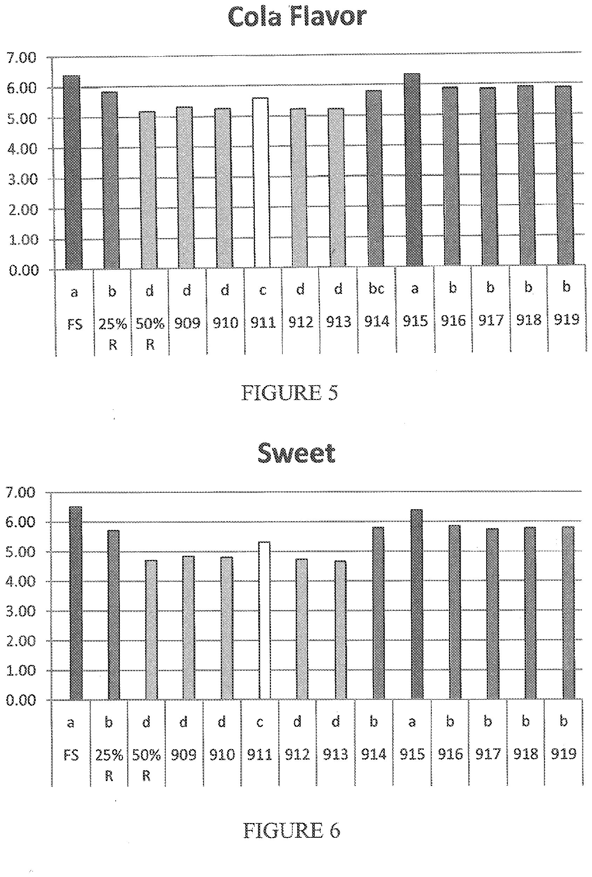

### Cola Flavor, Figure 5

25% Reduced HFCS Variants (#914-919): Compound #915 is similar to Full HFCS Benchmark for Cola Flavor intensity. Remaining 25% reduced HFCS variants are not different from 25% reduced HFCS control

50% Reduced HFCS Variants (#909-913): Compound #911 has the most Cola Flavor. More Cola Flavor than 50% reduced HFCS control but not as much as 25% reduced HFCS control. Remaining 50% reduced HFCS variants are not different from 50% reduced HFCS control

### Sweet Taste, Figure 6

25% Reduced HFCS Variants (#914-919): #915 is similar to Full HFCS Benchmark for sweet taste. Remaining 25% reduced HFCS variants are not different from 25% reduced HFCS control

50% Reduced HFCS Variants (#909-913): #911 has the most sweet taste. More sweet taste than 50% reduced HFCS control but not as much as 25% reduced HFCS control. Remaining 50% reduced HFCS variants are not different from 50% reduced HFCS control

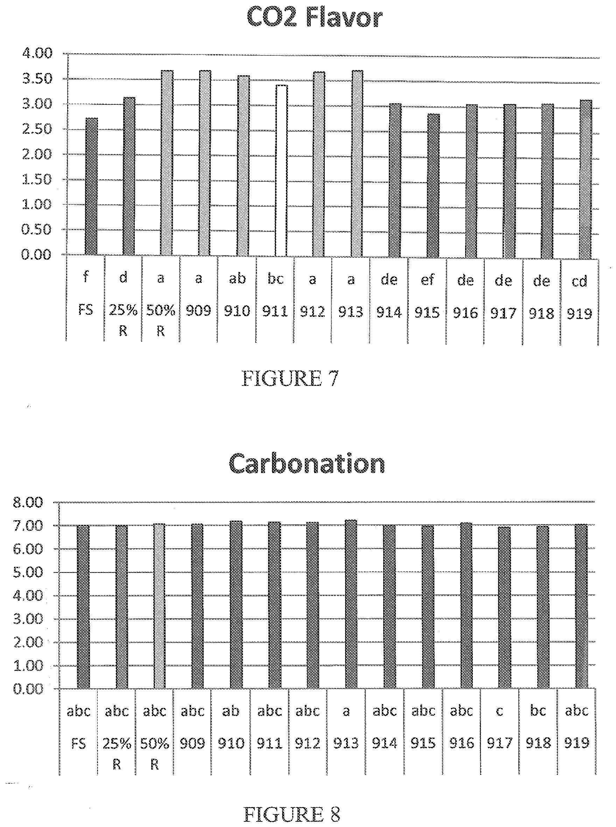

### CO2 Flavor, Figure 7

25% Reduced HFCS Variants (#914-919): #915 is similar to Full HFCS Benchmark for CO2 Flavor intensity. Remaining 25% reduced HFCS variants are not different from 25% reduced HFCS control.

50% Reduced HFCS Variants (#909-913): #911 has the most least CO2 Flavor. Less Cola Flavor than 50% reduced HFCS control but more than 25% reduced HFCS control. Remaining 50% reduced HFCS variants are not different from 50% reduced HFCS control.

### Perceived Carbonation, Figure 8

None of the samples differ for perceived Carbonation.

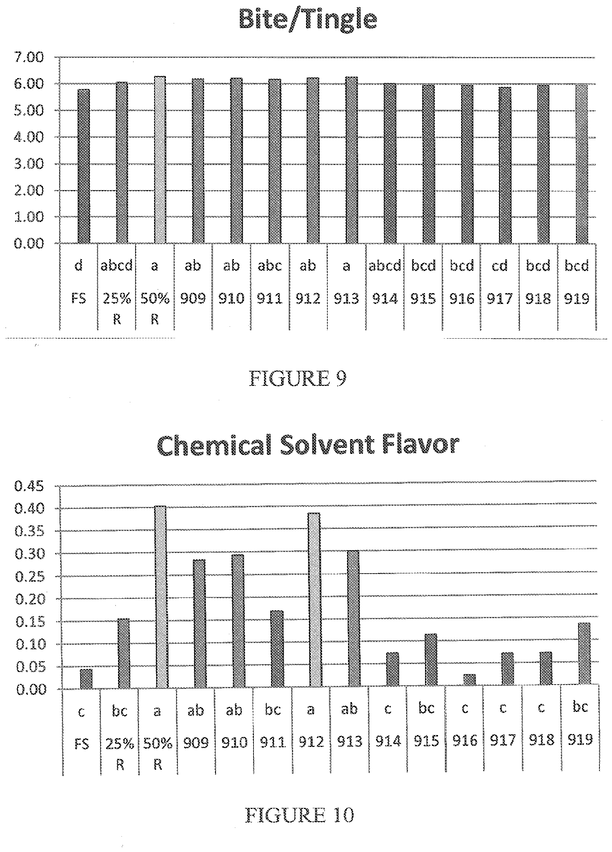

### Bite/Tingle, Figure 9

25% Reduced HFCS Variants (#914-919): None differ from Full HFCS Benchmark or 25% reduced HFCS control. #914 is also not different from 50% reduced HFCS control.

50% Reduced HFCS Variants (#909-913): None differ from 25% reduced HFCS control. None differ from 50% reduced HFCS control.

### Chemical Solvent Flavor, Figure 10

25% Reduced HFCS Variants (#914-919): None differ from the Full HFCS Benchmark. Compounds #915 and #919 are also not different from 25% reduced HFCS control.

50% Reduced HFCS Variants (#909-913): Compound #911 is not different from either Full HFCS Benchmark or 25% reduced HFCS control. Compounds #909, #910 and #913 are not different from either 25% reduced HFCS or 50% reduced HFCS controls. Remaining 50% reduced HFCS variants are not different from 50% reduced HFCS control.

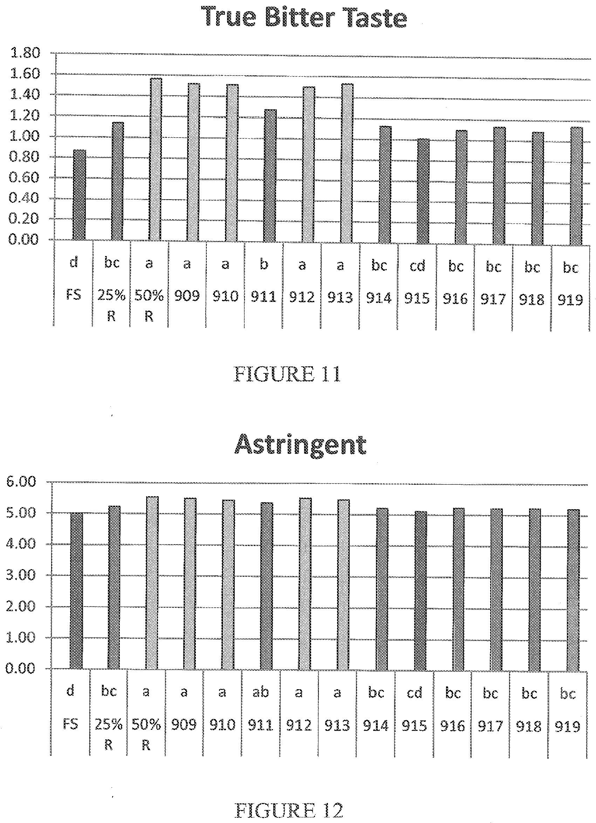

### True Bitter taste, Figure 11

25% Reduced HFCS Variants (#914-919): Compound #915 is not different from Full HFCS Benchmark or 25% reduced HFCS control for True Bitter Taste. Remaining 25% reduced HFCS variants are not different than 25% reduced HFCS control.

50% Reduced HFCS Variants (#909-913): Compound #911 is similar to 25% reduced HFCS control. Remaining 50% reduced HFCS variants are not different than 50% reduced HFCS control.

### Astringent, Figure 12

25% Reduced HFCS Variants (#914-919): Compound #915 is not different from Full HFCS Benchmark or 25% reduced HFCS control for True Bitter Taste. Remaining 25% reduced HFCS variants are not different than 25% reduced HFCS control.

50% Reduced HFCS Variants (#909-913): Compound #911 is similar to 25% reduced HFCS control. Remaining 50% reduced HFCS variants are not different than 50% reduced HFCS control.

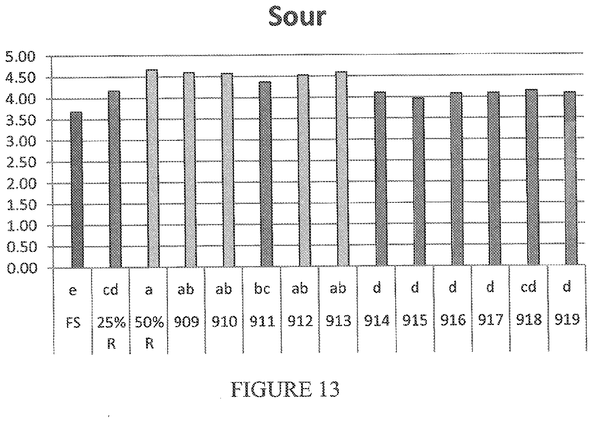

### Sour Taste, Figure 13

25% Reduced HFCS Variants (#914-919): Compound #915 is not different from Full HFCS Benchmark or 25% reduced HFCS control for True Bitter Taste. Remaining 25% reduced HFCS variants are not different than 25% reduced HFCS control.

50% Reduced HFCS Variants (#909-913): Compound #911 is similar to 25% reduced HFCS control. Remaining 50% reduced HFCS variants are not different than 50% reduced HFCS control.

## Claims

1. A beverage comprising:
water;
a non-nutritive sweetener;
a combination of caprylic acid, caproic acid, and butyric acid; and
at least one aldehyde selected from the group consisting of decanal, nonanal, and 2-methy 1-butyraldehyde;
wherein the concentration of the combined caprylic acid, caproic acid, and butyric acid in the beverage is between 50 parts per trillion and 500 parts per million;
wherein the aldehyde is present in an amount from 0.001 wt% to 1.0 wt;
wherein the non-nutritive sweetener is Rebaudioside A

2. The beverage of claim 1, further comprising
one, two, three, or all of heptanoic acid, lauric acid, propionic acid, and isovaleric acid, or
at least two of decanal, nonanal, and 2-methyl-butyraldehyde, or
a combination of decanal, nonanal, and 2-methyl-butyraldehyde.

3. The beverage of claim 1 or claim 2, further comprising an acid or astringency blocker selected from the group consisting of a menthol faction and a mint faction.

4. The beverage of any one of claims 1 to 3, wherein the concentration of the combined caprylic acid, caproic acid, and butyric acid in the beverage is between 1 part per million to 250 parts per million.

5. The beverage of any one of claims 1 to 4, wherein the aldehyde is present in an amount from 0.005% to 0.55 wt%.

## Patentansprüche

1. Getränk, aufweisend:
Wasser;
ein nicht-nutritiver Süßstoff;
eine Kombination aus Caprylsäure, Capronsäure und Buttersäure; und
wenigstens einen Aldehyd, ausgewählt aus der Gruppe bestehend aus Decanal, Nonanal und 2-Methy-1-butyraldehyd;
wobei die Konzentration der kombinierten Caprylsäure, Capronsäure und Buttersäure im Getränk zwischen 50 Teilen pro Billion und 500 Teilen pro Million liegt;
wobei der Aldehyd in einer Menge von 0,001 Gew.-% bis 1,0 Gew.-% vorhanden ist;
wobei der nicht-nutritive Süßstoff Rebaudiosid A ist.

2. Getränk nach Anspruch 1, ferner aufweisend
eine, zwei, drei oder alle von Heptansäure, Laurinsäure, Propionsäure und Isovaleriansäure, oder
wenigstens zwei von Decanal, Nonanal und 2-Methylbutyraldehyd, oder
eine Kombination von Decanal, Nonanal und 2-Methylbutyraldehyd.

3. Getränk nach Anspruch 1 oder Anspruch 2, ferner aufweisend einen Säure- oder Adstringens-Blocker, ausgewählt aus der Gruppe bestehend aus einer Mentholfraktion und einer Minzfraktion.

4. Getränk nach einem der Ansprüche 1 bis 3, bei welchem die Konzentration der kombinierten Caprylsäure, Capronsäure und Buttersäure im Getränk zwischen 1 Teil pro Million und 250 Teilen pro Million liegt.

5. Getränk nach einem der Ansprüche 1 bis 4, bei welchem der Aldehyd in einer Menge von 0,005 Gew.-% bis 0,55 Gew.-% vorhanden ist.

## Revendications

1. Boisson comprenant :
de l'eau ;
un édulcorant sans valeur nutritive ;
une association d'acide caprylique, d'acide caproïque et d'acide butyrique ; et
au moins un aldéhyde choisi dans le groupe consistant en décanal, nonanal et 2-méthyle-1-butyraldéhyde ;
dans lequel la concentration de l'acide caprylique, de l'acide caproïque et de l'acide butyrique associés dans la boisson se situe entre 50 parties par trillion et 500 parties par million ;
dans lequel l'aldéhyde est présent dans une quantité de 0,001 % en poids à 1,0 % en poids ;
dans lequel l'édulcorant sans valeur nutritive est du Rébaudioside A.

2. Boisson selon la revendication 1, comprenant en outre :
un, deux, trois ou l'intégralité des acides : heptanoïque, laurique, propionique et isovalérique, ou
au moins deux des composés : décanal, nonanal et 2-méthyle-butyraldéhyde, ou
une association de décanal, nonanal et 2-méthyle-butyraldéhyde.

3. Boisson selon, soit la revendication 1, soit la revendication 2, comprenant en outre un acide ou un inhibiteur d'astringence choisi dans le groupe consistant en une part de menthol et une part de menthe.

4. Boisson selon l'une quelconque des revendications 1 à 3, dans lequel la concentration d'acide caprylique, d'acide caproïque et d'acide butyrique associés dans la boisson se situe entre 1 partie par million et 250 parties par million.

5. Boisson selon l'une quelconque des revendications 1 à 4, dans lequel l'aldéhyde est présent dans une quantité de 0,005 % en poids à 0,55 % en poids.
